**Europäisches Patentamt**

**European Patent Office**

**Office européen des brevets**

(19)

(11) Numéro de publication : **0 334 766 B1**

(12) # FASCICULE DE BREVET EUROPEEN

(45) Date de publication du fascicule du brevet :
20.05.92 Bulletin 92/21

(51) Int. Cl.⁵ : **B21D 28/24, B23D 23/02**

(21) Numéro de dépôt : **89400850.7**

(22) Date de dépôt : **24.03.89**

(54) **Outils de poinçonnage et de coupe pour profilé métallique.**

(30) Priorité : **25.03.88 FR 8803974**

(43) Date de publication de la demande :
**27.09.89 Bulletin 89/39**

(45) Mention de la délivrance du brevet :
**20.05.92 Bulletin 92/21**

(84) Etats contractants désignés :
**AT BE CH DE ES GB GR IT LI LU NL SE**

(56) Documents cités :
**DE-A- 2 753 212**
**FR-A- 2 299 934**
**FR-A- 2 310 868**
**FR-A- 2 403 840**
**US-A- 2 855 999**

(73) Titulaire : **TECHNAL S.A.**
**270, rue Léon Joulin**
**F-31037 Toulouse Cedex (FR)**

(72) Inventeur : **Clauzet, Robert**
**5 avenue du Parc**
**F-31700 Blagnac (FR)**
Inventeur : **Fortier, Jean-Hugues**
**28 rue des Marchands**
**F-31000 Toulouse (FR)**

(74) Mandataire : **Grosset-Fournier, Chantal**
**Catherine et al**
**SC Ernest Gutmann/Yves Plasseraud 67**
**boulevard Haussmann**
**F-75008 Paris (FR)**

EP 0 334 766 B1

### Description

La présente invention est relative à un outil de poinçonnage et de coupe pour profilé métallique, en particulier pour profilé en alliage de métal léger du genre de ceux utilisés en menuiserie métallique pour constituer des guides, ferrures, chambranles ou autres encadrements divers de portes, fenêtres ou panneaux analogues.

On sait que de tels profilés, généralement fabriqués avec des longueurs importantes, comportent essentiellement au moins une surface plane de largeur déterminée, avec des parties en retour vers le dessus ou le dessous de cette surface, ces parties étant destinées à ancrer le profilé dans un mur ou autre paroi de support analogue d'un côté, et à former de l'autre des rails de coulissement ou d'engagement pour des pièces ou panneaux rapportés sur les profilés.

La disposition de ces rails selon la largeur des profilés peut être diffférente de l'un à l'autre, de même que les dimensions transversales de ces profilés eux-mêmes. Or, selon le cas, les necessités de leur utilisation conduisent à réaliser dans la surface plane de ces profilés, des perçages dont la répartition varie d'un type de profilé à l'autre.

En outre, il est généralement nécessaire de couper ou "gruger" les rails à leurs extrémités, pour permettre le montage, à coupe droite par exemple, d'autres rails, s'étendant perpendiculairement au premier.

On conçoit donc l'intérêt de disposer d'un outil permettant de s'adapter à différents types de profilés pour faire varier, au gré de l'utilisateur, le nombre et/ou la répartition des trous de perçage dans la surface plane du profilé, et également de réaliser la coupe de celui-ci, notamment des rails qu'il comporte à leurs extrémités, sur des longueurs qui peuvent être modifiées à volonté selon le type de profilé concerné, ceci sans avoir à changer d'outil qui, au contraire, peut être facilement adapté aux cotes des perçages et aux longueurs de grugeage.

On connait par ailleurs dans la technique des outils à poinçons multiples, qui comportent un tiroir coulissant à l'intérieur d'un bâti supportant une pluralité de poinçons de perçage parallèles, montés dans des guides du bâti et présentant chacun une tête, apte à coopérer avec une pièce d'actionnement se déplaçant par rapport au bâti et exerçant sur la tête des poinçons un effort axial de telle sorte que, du fait de leur déplacement à l'encontre d'une enclume ou matrice supportant le profilé à percer, ces poinçons puissent réaliser dans celui-ci les trous correspondants. De façon classique, le tiroir comporte des évidements ménagés dans sa surface en regard des têtes des poinçons de manière que, selon sa position relative par rapport au bâti, tout ou seulement partie de ces têtes soit manoeuvrée par la pièce d'actionnement, selon que ces têtes échappent ou au contraire s'engagent dans un évidement du tiroir auquel cas le poinçon correspondant n'est pas commandé mais coulisse relativement par rapport à ce tiroir sans percer le profilé.

Cette solution détermine en principe le retour des poinçons consécutivement au déplacement du tiroir par suite de l'effet de la gravité. Or, il s'avère que, en pratique, se produisent des blocages des têtes de ces poinçons, ce qui rend l'outil peu fiable surtout si les cadences de fonctionnement sont élevées. En outre, elle ne permet pas de combiner directement la sélection des poinçons avec un indexage de leurs positions par rapport à l'extrémité du profilé, au moyen d'une butée réglable et immobilisant de manière précise ce profilé par rapport aux poinçons. Dans les réalisations connues en effet, les commandes du tiroir et de la butée sont indépendantes, ce qui génère des erreurs et des imprécisions dans leurs positionnements relatifs.

On a cependant déjà prévu, dans la technique de tels outillages, d'améliorer la structure des outils, en ménageant dans le tiroir des surfaces inclinées sur la direction d'actionnement des poinçons, de telle sorte que les têtes de ceux-ci puissent plus aisément glisser sur ces surfaces et éviter dans une certaine mesure les blocages précités. Toutefois, ces perfectionnements ne permettent pas d'éliminer totalement les inconvénients mentionnés, du fait en particulier qu'ils ne sont pas conçus pour un positionnement coordonné et concommittant d'une butée et des poinçons avec un outil permettant en outre de réaliser la coupe ou grugeage du profilé, ceci sans autre réglage particulier.

La présente invention a donc pour objet un outil de poinçonnage et de coupe, dont la structure est agencée pour permettre de réaliser des sélections diverses dans les emplacements précis des perçages à effectuer dans un profilé, à chaque fois en fonction de la largeur de celui-ci et de la disposition dans sa surface des rails ou autres éléments qu'il comporte. Elle a également pour objet un outil qui permette d'obtenir, en complément avec de tels perçages, la coupe des rails du profilé avec une longueur de grugeage dont la longueur peut être au choix prédéterminée.

Selon l'invention, l'outil considéré, comportant une matrice de support montée ou autrement formée dans un bâti fixe muni d'au moins un logement traversant propre à recevoir le profilé à poinçonner et une pièce d'actionnement mobile vis-à-vis de la matrice à l'intérieur du bâti pour agir sur les têtes d'un ensemble de poinçons parallèles, aptes à coulisser dans des guides prévus dans le bâti pour percer le profilé par appui sur la matrice à l'intérieur du logement traversant, la pièce d'actionnement comportant un premier tiroir coulissant transversalement selon une direction donnée dans une chambre ouverte latéralement prévue dans la pièce, des évidements étant prévus pour permettre l'échappement de certaines au moins des têtes des poinçons selon la position relative du tiroir par rapport à la pièce, se caractérise en ce que la direction de déplacement du premier tiroir est perpendiculaire à une direction de déplacement dans la chambre d'un second tiroir, disposé sous le premier et également muni d'évidements pour l'échappement relatif de certaines au moins des têtes des poinçons, le premier tiroir comportant en outre, articulé autour d'un axe perpendiculaire à sa direction de déplacement, une butée pivotante munie d'un talon plan, la butée traversant une lumière ménagée dans le second tiroir pour amener son talon à constituer un appui pour l'extrémité du profilé engagé dans le logement traversant du bâti, la position de la butée étant variable parallèlement à la longueur du profilé et liée à la position relative du premier tiroir dans celui-ci.

Selon une caractéristique particulière de l'invention, le second tiroir est avantageusement constitué de deux plaques indépendantes, escamotables parallèlement à elles-mêmes à l'intérieur d'un cadre, lui-même monté mobile selon la direction de déplacement du tiroir à l'intérieur de la chambre ouverte de la pièce d'actionnement.

De préférence, les plaques escamotables du deuxième tiroir comportent des nervures latérales, engagées dans des rainures prévues dans les faces parallèles en regard du cadre, permettant ainsi un déplacement contrôlé des plaques, ensemble ou séparément, dans le cadre à l'intérieur de la chambre en fonction de la position du premier tiroir qui, selon le cas, empêche ou laisse libre ce déplacement de s'effectuer, l'ensemble formé par les deux tiroirs à l'intérieur de la chambre agissant sur tout ou seulement une partie des têtes des poinçons pour le perçage du profilé.

Selon une autre caractéristique également, le cadre contenant le second tiroir, comporte deux côtés longitudinaux, parallèles à la direction de déplacement du second tiroir et deux côtés transversaux, parallèles à la direction de déplacement du premier tiroir.

Le premier tiroir est muni d'un tenon afin de guider ce dernier dans la rainure située dans la pièce d'actionnement. Les déplacements du premier et deuxième tiroirs sont indispensables.

Avantageusement, le déplacement du premier tiroir est indexé en des positions successives prédéterminées au moyen d'un doigt à ressort porté par la pièce d'actionnement et dont l'extrémité, dépassant à l'intérieur de la chambre, s'engage dans l'un quelconque d'une série de trous successifs, ménagés dans la face correspondante du tiroir, parallèlement à sa direction de déplacement. selon chaque position ainsi déterminée, le premier et le second tiroirs délimitent pour l'ensemble des poinçons une série de configurations successives de la face d'appui de la pièce d'actionnement vis-à-vis des têtes des poinçons qui, dans chaque cas, sont alternativement actionnées ou libres de s'échapper dans les évidements prévus dans les tiroirs, sans pouvoir alors percer le profilé lors du mouvement de la pièce vis-à-vis de la matrice.

Selon encore une autre caractéristique de l'outil selon l'invention, l'une au moins des deux plaques du second tiroir comporte une portée inclinée, propre à coopérer avec la butée articulée sur le premier tiroir, de façon à permettre d'escamoter cette butée dans la lumière du second tiroir consécutivement au retrait maximal du premier tiroir dans la chambre de la pièce d'actionnement.

En complément aux dispositions ainsi mise en oeuvre, le bâti fixe comporte une fente, distincte du logement traversant et apte à recevoir le profilé coulissant jusqu'à amener son extrémité en butée contre une targette d'appui, dont la position, faisant saillie hors du bâti, est commandée par le premier tiroir, lorsque celui-ci est en engagement maximal à l'intérieur de la chambre de la pièce d'actionnement.

De préférence, la targette d'appui est soumise à l'action d'un ressort de rappel à l'encontre duquel elle est soumise à la poussée exercée par le premier tiroir.

La targette délimite donc la profondeur d'engagement du profilé dans la fente du bâti et par suite la zone des rails de celui-ci soumise à l'action d'un couteau de coupe transversale, coulissant vis-à-vis du bâti fixe et adapté à gruger les rails, en éliminant notamment une portion du métal les constituant, ce couteau étant porté par un chariot monté mobile contre une face latérale du bâti, parallèlement à la fente.

D'autres caractéristiques d'un outil de poinçonnage et de coupe établi conformément à l'invention, apparaîtront encore à travers la description qui suit d'un exemple de réalisations, donné à titre indicatif et non limitatif, en référence aux dessins annexés sur lesquels :

– la Figure 1 est une vue schématique en coupe et en perspective partielles d'un profilé métallique adapté à être percé et coupé au moyen d'un outil selon l'invention.

– la Figure 2 illustre en vue générale l'outil considéré, permettant de recevoir le profilé selon deux orientations distinctes pour réaliser successivement dans celui-ci, d'une part divers perçages selon une disposition prédéterminée et d'autre part le grugeage de l'extrémité d'un rail porté par ce profilé.

– la Figure 3 est une vue en perspective éclatée des deux tiroirs, du cadre et du bâti fixe constituant les éléments essentiels de l'outil considéré.

– la Figure 4 est une vue en coupe transversale à plus grande échelle de l'outil illustré sur la Figure 2.

– la Figure 5 est une vue en coupe longitudinale de l'outil, selon un plan perpendiculaire au plan de la Figure 3

– la Figure 6 est une vue complémentaire illustrant certains détails de celui-ci.

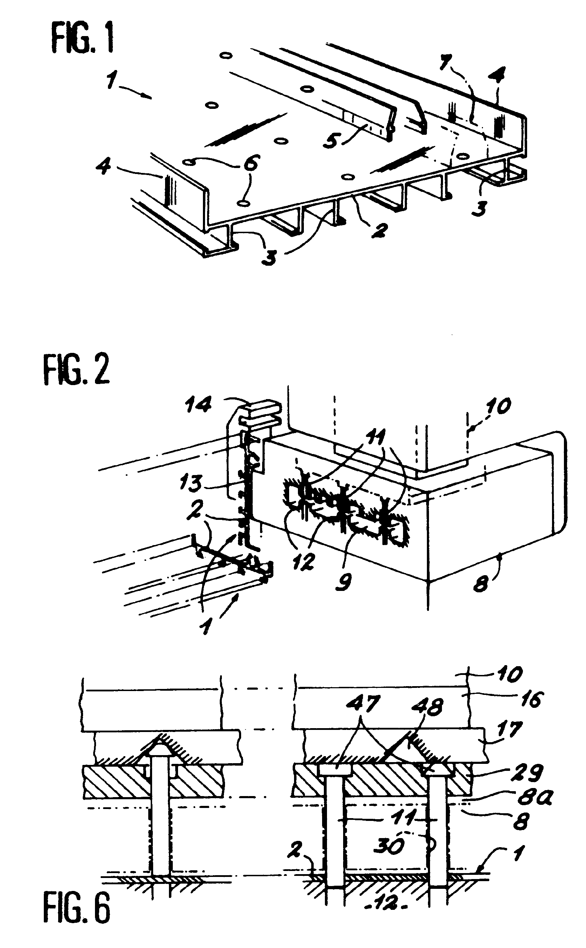

Dans l'exemple plus spécialement illustré sur les Figures, l'outil de poinçonnage et de coupe est notamment prévu pour percer et gruger un profilé métallique, du genre de celui désigné sous la référence 1 sur la Figure 1. Ce profilé comporte de façon en lui-même classique dans la technique, une surface plane 2 sur laquelle sont venus de fabrication, en particulier par extrusion, des extensions 3, permettant d'ancrer le profilé dans un mur ou une paroi de support quelconque (non représentée) et à l'opposé, des rebords latéraux 4, ainsi que les cotés d'au moins un rail de guidage 5 pour un panneau (non représenté) engagé ou monté coulissant dans ce rail.

La fixation du profilé 1 ainsi que les nécessités de montage sur celui-ci d'autres profilés ou accessoires appropriés, exigent la réalisation dans la surface plane 2 perçages 6, dont les emplacements et notamment les écartements mutuels des trous selon la longueur du profilé, sont déterminés et différents pour chaque type de produit. On conçoit en effet que le profilé peut présenter des formes variées, et en particulier que sa largeur peut être différente d'une structure à l'autre et que la disposition dans celui-ci du rail 5 et des emplacements des perçages 6 soient également distincts. De même, on conçoit que pour les besoins de sa mise en oeuvre, le rail 5 puisse lui-même être coupé ou grugé à une ou à ses deux extrémités, la référence 7 schématisant sur la Figure 1, la portion du rail ainsi enlevée. Là également, on comprend que la portion 7 peut être variable d'un profilé à un autre.

La Figure 2 illuste schématiquement l'outillage permettant selon l'invention de réaliser sur le profilé 1 les perçages et le grugeage souhaités. A cet effet l'outillage comporte principalement un bâti de support fixe 8, comportant un logement traversant 9 dans lequel le profilé 1 peut être introduit latéralement, les perçages 6 étant réalisés une fois cette mise en place effectuée par le déplacement relatif vis-à-vis du bâti 8, d'une pièce d'actionnement 10. Celle-ci agit sur un ensemble de poinçons 11, parallèles, montés et guidés dans le bâti 8 perpendiculairement à la surface plane 2 du profilé, celui-ci reposant dans le logement 9 sur une matrice 12, elle-même conçue avec le logement 9 pour accommoder et guider autant de formes distinctes de profilés que nécessaire.

Sur la Figure 2, on peut également voir que le même profilé 1 peut être engagé dans une fente latérale 13, prévue sur le côté du bâti 8, cette fente s'étendant de préférence perpendiculairement à la direction transversale du logement 9, en étant délimitée entre le bâti et un support latéral 14, rapporté et fixé sur le côté de celui-ci.

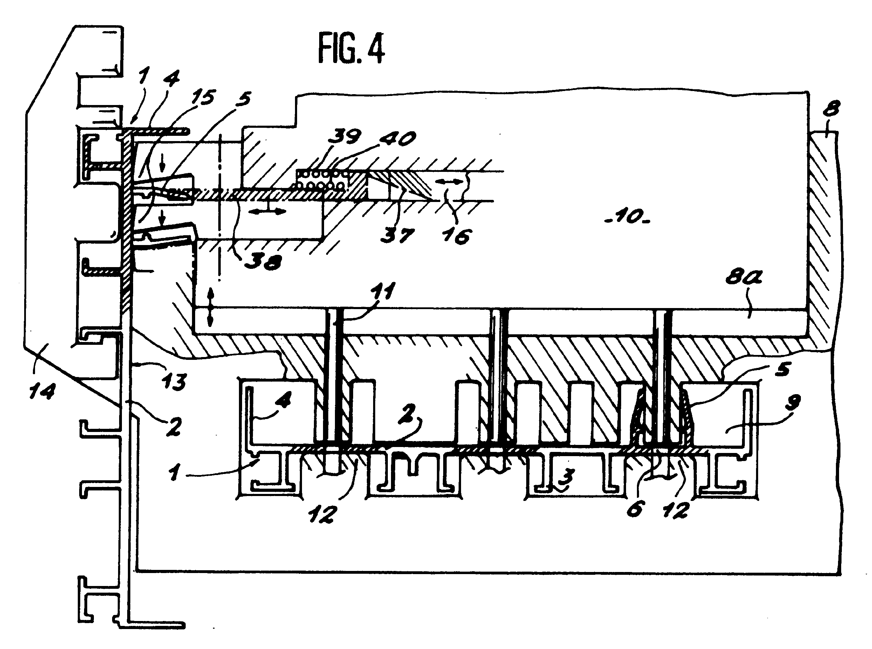

Comme on le voit schématiquement sur la Figure 4, le profilé 1 lorsqu'il est engagé dans la fente 13, subit dans celle-ci un grugeage de l'extrémité 7 du rail 5 qu'il comporte, grâce au déplacement vertical avec la pièce d'actionnement 10, d'un couteau latéral 15 à deux lames, celles-ci venant simultanément sectionner les deux côtés du rail.

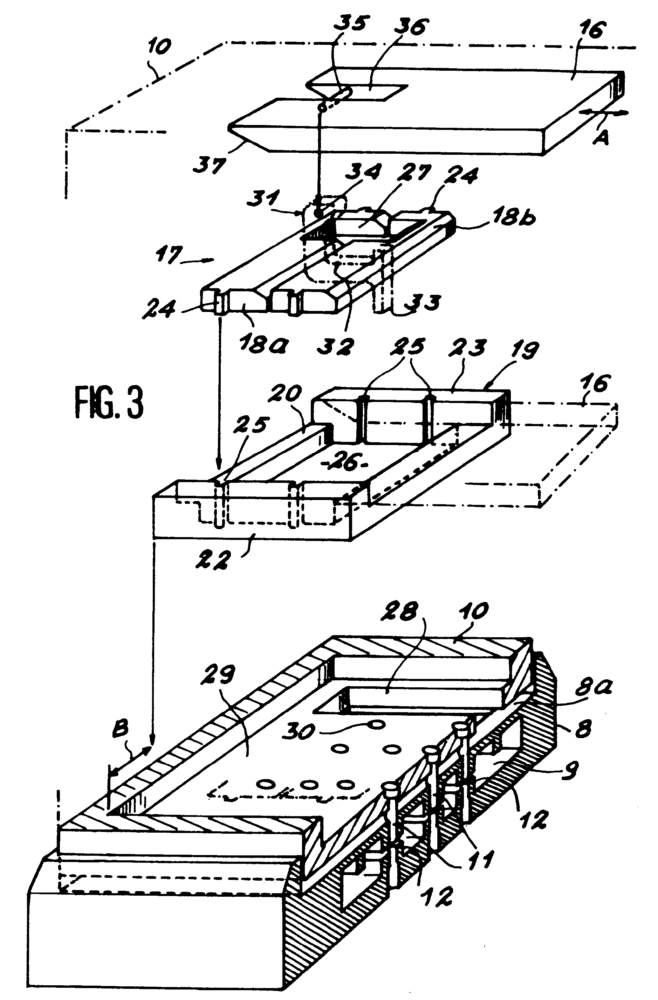

Les Figures 3, 4 et 5 illustrent avec plus de détails les moyens mis en oeuvre, conformément à l'invention, pour permettre à l'outil considéré de faire varier à la demande, les emplacements des perçages 6 réalisés par les poinçons 11, aussi bien que la profondeur de grugeage sur le rail 5 du profilé.

A cet effet, la pièce d'actionnement 10 comporte un premier tiroir 16, de forme générale parallélépipédique, adapté à se déplacer vis-à-vis de la pièce 10 selon une direction schématisée par la double flèche A sur la Figure 3. A ce premier tiroir 16, est associé un second tiroir 17, constitué de deux plaques voisines, indépendantes, respectivement 18a et 18b, elles-mêmes montées mobiles, à l'intérieur d'un cadre 19, ce dernier avec les deux plaques 18a et 18 b pouvant être en bloc déplacé selon une direction perpendiculaire à celle du déplacement du premier tiroir 16, schématisée sur la même Figure 3 par la double flèche B.

Le cadre 19 comporte deux côtés latéraux parallèles, respectivement 20 et 21, s'étendant selon les grands côtés des plaques 18a et 18b et deux côtés transversaux respectivement 22 et 23. Les plaques 18a et 18b sont indépendantes l'une de l'autre à l'intérieur du cadre 19 et sont guidées dans ce dernier, en étant susceptibles de se déplacer relativement l'une par rapport à l'autre, grâce à des nervures 24 prévues dans leurs bords latéraux, ces nervures coulissant dans des rainures parallèles 25 ménagées dans les faces en regard des côtés latéraux 22 et 23 du cadre 19. Celui-ci délimite intérieurement un logement 26 dans lequel sont ainsi disposées les deux plaques 18a et 18b. Ces dernières comportent une lumière transversale 27, la pièce d'actionnement 10 présentant de même une fente 28 ménagée en coïncidence dans son fond 29.

Dans la fente 29 de la pièce 10 sont prévus des passages 30 pour le logement des têtes 47 des poinçons 11. La pièce 10 peut coulisser verticalement dans le bâti 8, notamment dans un chambrage ouvert 8a, prévu à la partie supérieure de ce bâti.

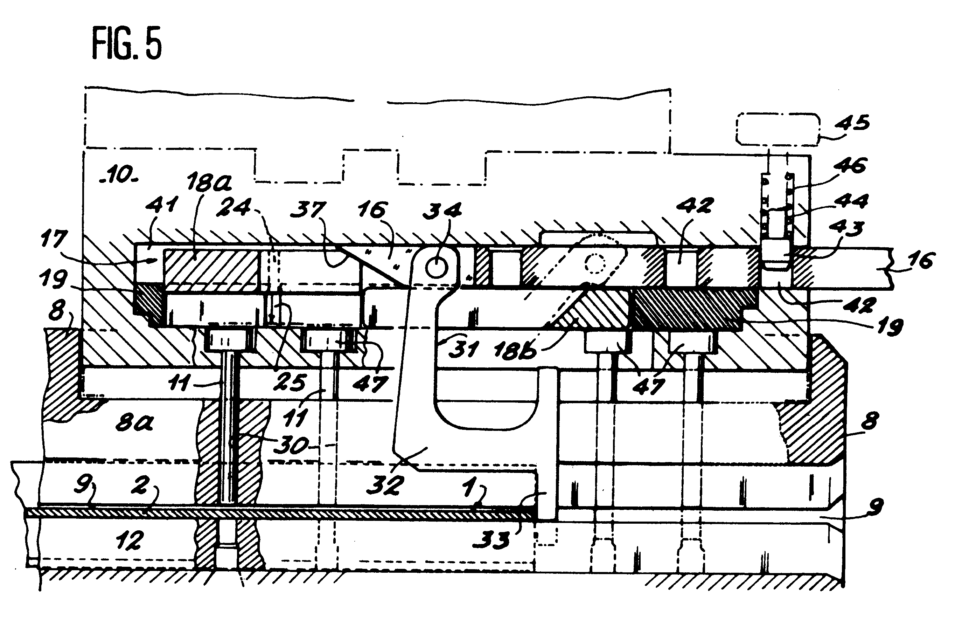

Une butée escamotable 31, comportant un corps en forme "L" terminé par un talon plan 33 est munie, à l'opposé, d'un trou 34 permettant de la monter oscillante autour d'un axe 35, porté par le premier tiroir 16 à l'intérieur d'une rainure 36, ménagée sensiblement au milieu et sur un des côtés du tiroir 16. L'extrémité correspondante de ce tiroir est avantageusement taillée pour former biseau 37, susceptible notamment d'agir sur une targette transversale 38, montée mobile dans un passage 39 de la pièce 10, tout en étant soumise à l'action antagoniste d'un ressort 40 (Figure 4). La position d'engagement maximale du tiroir 16 dans une chambre ouverte 41 ménagée dans la pièce 10 (Figure 5) permet ainsi de faire saillir latéralement la targette 38 qui joue alors le rôle d'une butée pour le profilé 1 lorsqu'il est mis en place dans la fente 13, en ajustant ainsi la longueur de grugeage 7 réalisée par le couteau à double lame 15 précédemment mentionné.

Sur la Figure 5, on voit ensuite comment peut être ajustée la position du premier tiroir 16 à l'intérieur de la chambre 41, notamment grâce à l'indexage réalisé par engagement dans des trous 42 convenablement espacés et disposés dans le prolongement les uns des autres selon la direction de déplacement du tiroir de l'extrémité 43 d'un doigt 44, comportant une tête de manoeuvre 45 et un ressort de rappel 46.

Pour chaque position ainsi définie du tiroir 16, la butée oscilante 31 se déplace correlativement dans la lumière 27 entre les plaques 18a et 18b du second tiroir 17, de telle sorte que son talon plan 33 forme un appui pour l'extrémité du profilé 1 lorsque celui-ci est mis en place dans le logement 9 du bâti 8 contre la matrice 12. Dans cette position, l'abaissement de la pièce d'actionnement 10 vis à vis du bâti 8, permet par appui sur le premier tiroir 16 et les plaques 18a et 18b du second tiroir 17 à l'intérieur du cadre 19 qui les entourent, de transmettre aux têtes 47 des poinçons 11 un effort réparti, dirigé vers le bas et tel que soient réalisés dans la surface plane 2 du profilé 1, les perçages 6 désirés, aux emplacements prévus. Dans ce mouvement d'abaissement de la pièce 10, les poinçons 11 coulissent dans les guides 30 à l'appui vertical de la matrice 12.

Si, pour des raisons quelconques et notamment selon les types de profilés utilisés, il convient que les emplacements des perçages soient modifiés, il suffit de jouer sur les indexations des tiroirs 16 et 17 en adaptant leurs déplacements relatifs dans les directions A et/ou B (Figure 4). Ainsi pour un retrait suffisant du premier tiroir 16, la plaque 18a peut être totalement escamotée vers le haut, tandis que la plaque 18b reste en place. Dans ce cas, on comprend que lors de l'abaissement de la pièce d'actionnement 10, seules les têtes 47 des poinçons 11 en contact avec cette plaque 18b recevront l'effort de la pièce, en réalisant les perçages correspondants, alors que les autres poinçons 11 qui se trouvent au droit de la plaque 18a sont au contraire effacés vers le haut dans l'espace laissé libre à l'intérieur du cadre 19 par la plaque 18a.

De même, pour chaque position du premier tiroir 16, la butée 31 suit celui-ci et délimite à chaque fois l'arrêt du profilé dans le logement 9 du bâti 8. En jouant donc sur la position des deux tiroirs, on peut donc à volonté faire varier les emplacements des perçages selon les positions relatives des poinçons, du tiroir et du profilé. En fin de course du tiroir 16, la butée 31 peut être complètement relevée par coopération avec le bord 48 correspondant de la plaque 18b, le profilé 1 étant dans ce cas libre de coulisser dans le logement 9, le talon 33 alors complètement dégagé.

La Figure 6 illustre un autre détail de la réalisation des tiroirs 16 et 17 montés dans la chambre 41 de la pièce 10, en illustrant notamment des évidements 48 pouvant être également prévus dans la face du tiroir 17 tournée vers les têtes 47 des poinçons 11, permettant selon le cas l'engagement ou le retrait de certains de ces derniers, indépendamment du mouvement propre des plaques 18a et 18b déjà exposé.

On réalise ainsi un outil de poinçonnage et de coupe dont la conception et la structure visent à réaliser, de façon simple et avec une commutation rapide, un nombre élevé de combinaisons dans les emplacements des perçages obtenus par les poinçons, en déterminant à chaque fois la quantité et les positions de ceux de ces poinçons mis en jeu, en fonction des profilés travaillés et des caractéristiques particuliers des éléments de structure de ces derniers.

Bien entendu, il va de soi que l'invention ne se limite pas au seul exemple de réalisation donné ci-dessus à titre purement indicatif mais en embrasse au contraire toutes les variantes.

## Revendications

1. Outil de poinçonnage et de coupe pour profilé métallique (1) comportant au moins une surface plane (2) de largeur déterminée où doivent être réalisés des perçages selon une disposition et une répartition prédéterminées et au moins un rail (5) s'étendant sur une des faces de la surface plane dont les extrémités sont à découper, comportant une matrice de support (12) montée ou autrement formée dans un bâti fixe (8) muni d'au moins un logement traversant (9) propre à recevoir le profilé à poinçonner et une pièce d'actionnement (10) mobile vis-à-vis de la matrice à l'intérieur du bâti pour agir sur les têtes (47) d'un ensemble de poinçons parallèles (11), aptes à coulisser dans des guides (30) prévus dans le bâti pour percer le profilé par appui sur la matrice (12) à l'intérieur du logement traversant (9), la pièce d'actionnement (10) comportant un premier tiroir (16) coulissant transversalement selon une direction donnée dans une chambre (41) ouverte latéralement prévue dans la pièce, des évidements étant prévus pour permettre l'échappement de certaines au moins des têtes des poinçons selon la position relative du tiroir par rapport à la pièce, caractérisé en ce que la direction A de déplacement du premier tiroir est perpendiculaire à une direction B de déplacement dans la chambre d'un second tiroir (17), disposé sous le premier et également muni d'évidements (48) pour l'échappement relatif de certaines au moins des têtes des poinçons, le premier tiroir (16) comportant en outre, articulé autour d'un axe (36) perpendiculaire à sa direction de déplacement, une butée pivotante (31) munie d'un talon plan (33), la butée traversant une lumière (27) ménagée dans le second tiroir (17) pour amener son talon à constituer un appui pour l'extrémité du profilé (1) engagé dans le logement traversant (9) du bâti, la position de la butée étant variable parallèlement à la longueur du profilé et liée à la position relative du premier tiroir dans celui-ci.

2. Outil de poinçonnage et de coupe selon la revendication 1, caractérisé en ce que le second tiroir (17) est constitué de deux plaques indépendantes (18a et 18b), escamotables parallèlement à elles-mêmes à l'intérieur d'un cadre (19), lui-même monté mobile selon la direction de déplacement (B) du tiroir à l'intérieur de la chambre ouverte (41) de la pièce d'actionnement (10).

3. Outil de poinçonnage et de coupe selon la revendication 2, caractérisé en ce que les plaques escamotables (18a et 18b) du deuxième tiroir (17) comportent des nervures latérales (24), engagées dans des rainures (25) prévues dans les faces parallèles (22 et 23) en regard du cadre (19), permettant ainsi un déplacement contrôlé des plaques, ensemble ou séparément, dans le cadre à l'intérieur de la chambre (10) en fonction de la position du premier tiroir (16) qui, selon le cas, empêche ou laisse libre ce déplacement de s'effectuer, l'ensemble formé par les deux tiroirs à l'intérieur de la chambre agissant sur tout ou seulement une partie des têtes (47) des poinçons (11) pour le perçage du profilé (1).

4. Outil de poinçonnage et de coupe selon l'une quelconque des revendications 1 à 3, caractérisé en ce que le cadre (19) contenant le second tiroir (17), comporte deux côtés longitudinaux (20-21), parallèles à la direction de déplacement B du second tiroir et deux côtés transversaux (22 et 23), parallèles à la direction de déplacement A du premier tiroir (16), le premier tiroir (16) étant guidé par un système tenon rainure, le tenon étant situé sur la face supérieure du tiroir (16) et la rainure étant située dans la pièce d'actionnement (10) et le déplacement du cadre (19) selon la direction B est entraînée par le tiroir (16).

5. Outil de poinçonnage et de coupe selon l'une quelconque des revendications 1 à 4, caractérisé en ce que le déplacement du premier tiroir (16) est indexé en des positions successives prédéterminées au moyen d'un doigt à ressort (44) porté par la pièce d'actionnement (10) et dont l'extrémité (43), dépassant à l'intérieur de la chambre (41), s'engage dans l'un quelconque d'une série de trous successifs (42), ménagés dans la face correspondante du tiroir, parallèlement à sa direction de déplacement A.

6. Outil de poinçonnage et de coupe selon la revendication 2, caractérisé en ce que l'une au moins (18a) des deux plaques (18a et 18b) du second tiroir (17) comporte une portée inclinée, propre à coopérer avec la butée (31) articulée sur le premier tiroir, de façon à permettre d'escamoter cette butée dans la lumière (27) du second tiroir consécutivement au retrait maximal du premier tiroir (16) dans la chambre (41) de la pièce d'actionnement (10).

7. Outil de poinçonnage et de coupe selon l'une quelconque des revendications 1 à 6, caractérisé en ce que le bâti fixe (8) comporte une fente (13), distincte du logement traversant (9) et apte à recevoir le profilé (1) coulissant jusqu'à amener son extrémité en butée contre une targette d'appui (38), dont la position, faisant saillie hors du bâti, est commandée par le premier tiroir (16), lorsque celui-ci est en engagement maximal à l'intérieur de la chambre (41) de la pièce d'actionnement (10).

8. Outil de poinçonnage et de coupe selon la revendication 7, caractérisé en ce que la targette (38) est soumise à l'action d'un ressort de rappel (40) à l'encontre duquel elle est soumise à la poussée exercée par le premier tiroir (16).

9. Outil de poinçonnage et de coupe selon la revendication 8, caractérisé en ce que la targette (38) délimite la profondeur d'engagement du profilé (1) dans la fente (13) du bâti (8) et par suite la zone des rails (5) de celui-ci soumise à l'action d'un couteau de coupe transversal (15), coulissant vis à vis du bâti fixe, le couteau étant porté par un chariot monté mobile contre une face latérale (14) du bâti (8), parallèlement à la fente (13).

## Claims

1. A tool for punching and cutting a metal section member (1), there being provided at least one plane surface (2) of a predetermined width where piercings are to be performed in a predetermined arrangement and distribution, at least one rail (5) extending on one side of the plane surface whose ends are to be cut, there being provided a support matrix (12) disposed or otherwise devised in a fixed frame (8) formed with at least one through aperture (9) adapted to receive the section member to be punched and an actuating member (1Ø) movable relatively to the die (12) in the frame (8) to act on the heads (47) of a system of parallel punches (11) slidable in guides (3Ø) in the frame (8) to pierce the section member (1) by bearing on the die (12) in the aperture (9), the actuating member comprising a first slide (16) sliding transversely in a given direction in a laterally open chamber (41) in the actuating member (1Ø), recesses being present to enable at least some of the punch heads to escape in accordance with the position of the slide relatively to the actuating member (1Ø), characterised in that the direction (A) of movement of the first slide (16) is perpendicular to a direction (B) of movement in the chamber of a second slide (17) disposed below the first slide (16) and also formed with recesses (48) for the escape of at least some of the punch heads, the first slide (16) also comprising, articulated around a pivot (36) perpendicular to its direction of movement, a pivoting stop (31) which has a plane heel (33) and which extends through a slot (27) in the second slide (17) so that its heel (33) is effective as a support for the section member end engaged in the aperture (9) in the frame (8), the position of the abutment (31) being variable parallel to the length of the section member (1) and being related to the relative position of the first slide in it.

2. A tool according to claim 1, characterised in that the second slide (17) is in the form of two independent plates (18a, 18b) which are retractable parallel to themselves in a frame (19), the same being so disposed in the open chamber (41) of the actuating member (1∅) as to be movable in the direction (B) of movement of the second slide (17).

3. A tool according to claim 2, characterised in that the retractable plates (18a, 18b) have side ribs (24) engaged in grooves (25) in the facing parallel surfaces (22, 23) of the frame (19) to allow a controlled displacement of the plates together or separately in the frame (19) in the chamber (1∅) in dependence upon the position of the first slide (16) which inhibits or permits this movement to occur as required, the system which is embodied by the two slides in the chamber acting on all or just some of the heads (47) of the piercing punches (11).

4. A tool according to any of claims 1 to 3, characterised in that the frame (19) comprising the second slide (17) has two longitudinal sides (2∅, 21) which extend parallel to the direction (B) of movement of the second slide (17) and has two transverse sides (22, 23) which extend parallel to the direction (A) of movement of the first slide (16), the same being guided by a tongue and groove system, the tongue being on the top surface of the slide (16) and the groove being in the actuating member (1∅), and the slide (16) moves the frame (19) in the direction (B).

5. A tool according to any of claims 1 to 4, characterised in that the movement of the first slide (16) is indexed in consecutive predetermined positions by means of a spring finger (44) which is disposed on the actuating member (1∅), that end (43) of the finger (44) which projects into the chamber (41) engaging in any of a number of consecutive apertures (42) in the corresponding slide surface parallel to its direction (A) of movement.

6. A tool according to claim 2, characterised in that at least one (18a) of the two plates (18a, 18b) of the second slide (17) has an inclined bearing surface adapted to co-operate with the abutment (31) articulated to the first slide (16) so as to facilitate retraction of the abutment (31) in the slot (27) in the second slide (17) subsequently to maximum withdrawal of the first slide (16) in the chamber (41) of the actuating member (1∅).

7. A tool according to any of claims 1 to 6, characterised in that the fixed frame (8) is formed with a slot (13) which is separate from the aperture (9) and which is adapted to receive the section member (1) sliding until its end abuts a bearing member (38) whose position projecting from the frame (8) is controlled by the first slide (16) when the same is maximally engaged in the chamber (41) of the actuating member (1∅).

8. A tool according to claim 7, characterised in that the member (38) is biased by a return spring (4∅) against which it experiences the thrust applied by the first slide (16).

9. A tool according to claim 8, characterised in that the member (38) limits the depth of engagement of the section member (1) in the slot (13) in the frame (8) and, therefore, that zone of the frame rails (5) which experiences the action of a transverse cutting knife (15) sliding opposite the fixed frame, the knife being mounted on a carriage movable towards a side face (14) of the frame (8) parallel to the slot (13).

**Patentansprüche**

1. Stanz- und Schnittwerkzeug für metallische Profile (1), die mindestens eine ebene Platte (2) einer bestimmten Größe, in die Löcher gemäß einer vorbestimmten Anordnung und Verteilung eingebracht werden müssen, und mindestens eine Schiene (5) aufweisen, die sich auf einer der Vorderseiten der ebenen Platte erstreckt, wobei deren Enden abgeschnitten sind, mit einer Trägermatrize (12), die an einem festen Unterteil (8) angebracht oder anderweitig ausgebildet ist, ausgestattet mit mindestens einem innen liegenden Hohlraum (9), geeignet zur Aufnahme des Stanzprofils, und einem Antriebsteil (10), das gegenüber der Matrize im Inneren des Unterteils beweglich ist, zum Einwirken auf die Kopfenden (47) eines Satzes paralleler Stanzstempel (11), die in im Unterteil vorgesehenen Führungen (30) verschiebbar sind zum Durchbohren des Profils durch Druck auf die Matrize (12) im Inneren des innen liegenden Hohlraums (9), wobei das Antriebsteil (10) einen ersten Einschub (16) umfaßt, der sich quer zu einer gegebenen Richtung in einer seitlich geöffneten, im Antriebsteil vorgesehenen Kammer (41) verschieben läßt, wobei Aussparungen vorgesehen sind, um den Austritt von zumindest einigen Kopfenden der Stanzstempel gemäß der relativen Position des Einschubs in Bezug auf das Antriebsteil zu erlauben, dadurch gekennzeichnet, daß die Verschieberichtung (A) des ersten Einschubs senkrecht zu einer Verschieberichtung (B) in der Kammer eines zweiten Einschubs (17) ist, der unter dem ersten angeordnet und der ebenfalls mit Aussparungen (48) versehen ist, für den relativen Austritt von zumindest einigen Kopfenden der Stanzstempel, wobei der erste Einschub (16) überdies frei beweglich um eine Achse (36) senkrecht zu seiner Verschieberichtung angebracht ist, ein drehbares Axiallager (31) mit einem ebenen Absatz (33) aufweist, das drehbare Axiallager ein Schlitzloch (27) aufweist, angebracht im zweiten Einschub (17), um sein hinteres Ende zu verstellen, zur Unterstützung des Rands der Profile (1), eingepaßt in den innen liegenden Hohlraum (9) des Unterteils, wobei die Position des Axiallagers in paralleler Richtung variabel zur Länge des Profils ist und mit der relativen Position des ersten Einschubs darin verbunden ist.

2. Stanz- und Schnittwerkzeug nach Anspruch 1, dadurch gekennzeichnet, daß der zweite Einschub (17) aus zwei separaten Platten (18a und 18b) aufgebaut ist, die parallel zueinander versenkbar sind in das Innere einer Fassung (19), welche selbst beweglich entlang der Verschieberichtung (B) des Einschubs im Innern der geöffneten Kammer (41) des Antriebsteils (10) angebracht ist.

3. Stanz- und Schnittwerkzeug nach Anspruch 2, dadurch gekennzeichnet, daß die versenkbaren Platten (18a und 18b) des zweiten Einschubs (17) seitliche Verstärkungsrippen (24) aufweisen, die mit Rillen (25) in Eingriff stehen, welche in den zur Fassung (19) parallelen Seiten (22 und 23) vorgesehen sind, wodurch ein kontrolliertes Verschieben aller oder einzelner Platten in der Fassung im Innern der Kammer (10) bezogen auf die Position des ersten Einschubs (16) erlaubt wird, der gegebenenfalls diese Verschiebung verhindert oder zuläßt, wobei der aus den beiden Einschüben im Inneren der Kammer gebildete Aufbau auf alle oder nur einen Teil der Kopfenden (47) der Stanzstempel (11) zum Durchbohren der Profile (1) einwirkt.

4. Stanz- und Schnittwerkzeug nach einem der Ansprüche 1 bis 3, dadurch gekennzeichnet, daß die Fassung (19), die den zweiten Einschub (17) enthält, aus zwei Längsseiten (20-21) parallel zur Verschieberichtung (B) des zweiten Einschubs und aus zwei Querseiten (22 und 23) parallel zur Verschieberichtung (A) des ersten Einschubs (16) besteht, wobei der erste Einschub (16) von einem System zapfenförmiger Rillen geführt ist, wobei der Zapfen auf der Oberseite des Einschubs (16), und die Rille im Antriebsteil (10) gelagert ist, und die Verschiebung der Fassung (19) in Richtung (B) vom Einschub (16) mitgezogen wird.

5. Stanz- und Schnittwerkzeug nach einem der Ansprüche 1 bis 4, dadurch gekennzeichnet, daß das Verschieben des ersten Einschubs (16) in aufeinanderfolgenden Positionen festgelegt ist, die mittels eines vom Antriebsteil (10) getragenen Federzapfens (44) vorbestimmt sind und dessen Endteil (43), das in das Innere der Kammer (41) ragt, mit einem der mehreren der aufeinanderfolgenden Löcher (42) in Eingriff steht, die in der den Einschub entsprechenden Seite, parallel zu seiner Verschieberichtung (A) angebracht sind.

6. Stanz-und Schnittwerkzeug nach Anspruch 2, dadurch gekennzeichnet, daß zumindest eine (18a) der beiden Platten (18a und 18b) des zweiten Einschubs (17) eine geneigte Fläche aufweist, die geeignet ist, mit dem Axiallager (31), das beweglich auf dem ersten Einschub angebracht ist, zusammenzuwirken, um zu ermöglichen, daß dieses Axiallager in das Schlitzloch (27) des zweiten Einschubs versenkbar ist, nachdem sich der erste Einschub (16) nacheinander bis zu seinem maximalen Punkt in der Kammer (41) des Antriebsteils (10) zurückgezogen hat.

7. Stanz- und Schnittwerkzeug nach einem der Ansprüche 1 bis 6, dadurch gekennzeichnet, daß das feste Unterteil (8) einen Spalt (13) aufweist, der sich von dem innen liegenden Hohlraum (9) unterscheidet, und der geeignet ist, das Profil (1) aufzunehmen, das bis zur Aufnahme seines äußersten Endes im Axiallager gegen einen zusätzlichen Riegel (38) verschiebbar ist, dessen Lage ihn aus dem Unterteil hervorragen läßt, und der vom ersten Einschub (16) angetrieben wird, falls dieser im maximalen Eingriff mit dem Inneren der Kammer (41) des Antriebsteils (10) steht.

8. Stanz- und Schnittwerkzeug nach Anspruch 7, dadurch gekennzeichnet, daß der Riegel (38) der Wirkung einer Rückstellfeder (40) unterworfen ist und gegen die er einem vom ersten Einschub (16) ausgeübten Druck ausgesetzt ist.

9. Stanz- und Schnittwerkzeug nach Anspruch 8, dadurch gekennzeichnet, daß der Riegel (38) die Tiefe des Eingriffs der Profile (1) in den Spalt (13) des Unterteils (8) begrenzt und anschließend ihre Schienenzone (5) der Wirkung eines quer verlaufenden Schneidemessers (15) aussetzt, das sich gegenüber dem festen Unterteil verschiebt, wobei das Messer von einem gegen eine Seitenwand (14) des Unterteils (8) aufgestellten mobilen Sägeschlitten, parallel zum Spalt verschiebbar ist.

FIG. 1

FIG. 2

FIG. 6

FIG. 3

FIG. 4

FIG. 5

EP 0 334 766 B1